# EUROPEAN PATENT APPLICATION

(11) **EP 1 830 528 A1**
(43) Date of publication of application: **05.09.2007**
(21) Application number: 05802188.2
(22) Date of filing: 20.10.2005
(51) Int. Cl.: H04L 12/66, H04M 3/42, H04Q 7/20

(54) **A METHOD AND SYSTEM FOR AGENT REDIRECTING THE TERMINAL REQUEST**

(30) Priority: 26.11.2004 CN 200410096279
(71) Applicant: China Mobile Communications Corporation, Xicheng District Beijing 100032 (CN)
(72) Inventor: WU, Wei, Beijing 100032 (CN); ZHU, Chunmei, Beijing 100032 (CN); YU, Chuan, Beijing 100032 (CN); ZHENG, Zhaohui, Beijing 100032 (CN); TANG, Jianfeng, Beijing 100032 (CN)
(74) Representative: Price, Nigel John King
(86) International application number: PCT/CN2005/001725
(87) International publication number: WO 2006/056118

(57) **Abstract**

A method and system for agent redirecting the terminal request is provided. Firstly a uniform service address is preset for each service in the terminals. The terminal initiates a service access request. The agent gateway queries the service subscribing information of the user. The agent gateway determines the type of the service requested by the terminal according to the uniform service address and queries the address of the corresponding service server. The agent gateway transmits the service access request to the service server obtained by query. The service server returns the access response of the service to the terminal via the agent gateway. The present invention can choose the suitable service server and agent redirect the service access request to the designated service server in the case that multiple servers exist by presetting the uniform service address in the terminal. In the meantime, presetting the uniform service address in the terminal can avoid the complicated configuration process of the server address in the terminal and improve the service level for the users.

## Description

### Field of the Invention

The present invention relates to the technical field of mobile communication, and concretely relates to a method and system for agent redirecting the service request of customized mobile terminals.

### Background of the Invention

At present, mobile communication networks can provide a variety of services. In order to make it convenient for users to use, services can be customized in the mobile terminals in advance. Recently, many terminal providers can provide such kind of mobile terminals. Each service in the network is usually provided by respective service server. In order to carry out the presetting in the mobile terminals, it's necessary to preset the address of the service server in the customized mobile terminals. However, generally in the customized mobile terminals, the address of only one service server can be preset for each service and can't be changed once it has been preset. However, with the development of the scale of the network, the situation that a service is provided by multiple service servers together appears. And each server has its own address. Therefore, how to preset the addresses of the service servers in the terminals and select a specific server has become an urgent problem to be resolved.

### Summary of the Invention

The technical problem the present invention aims to settle is to provide a method and system for agent redirecting the terminal request, in order to solve the problem existing in the prior art on presetting the address and selecting a specific Service Server in a customized mobile terminal.

A method for agent redirecting the terminal request in accordance with the present invention comprises: presetting a uniform service address for each service in the terminal; the terminal initiating a service access request; the Agent Gateway querying the service subscribing information of the user; the Agent Gateway determining the type of the service requested by the terminal according to the uniform service address and querying the address of the corresponding Service Server; the Agent Gateway transmitting the service access request to the Service Server obtained by query; and the Service Server returning the service access response to the terminal via the Agent Gateway.

Said querying the address of the Service Server comprises: choosing the principle of address query according to the type of the service; and querying the address of the Service Server according to said principle.

The system for agent redirecting the terminal request in accordance with the present invention comprises: N Service Servers and a User Data Management System located in the mobile communication network, wherein said Service Servers are applied to providing specific service and said User Data Management System is applied to storing user numbers and corresponding service subscribing information thereof, wherein said system also comprises an Agent Gateway and an Address Query Server; said Agent Gateway is connected with the terminal, said Service Servers, said User Data Management System, and said Address Query Server respectively, and is applied to transmitting requests for querying the service subscribing information of the user and the address of the Service Server, and applied to transmitting the service access request and response; said Address Query Server is applied to querying the address of the Service Server corresponding to the current service request of the terminal.

The present invention can choose the suitable Service Server and redirect the service access request to the designated Service Server in the case that multiple servers exist by presetting the uniform service address in the terminal and bringing in the Agent Gateway and the Address Query Server. In the meantime, presetting the uniform service address in the terminal can avoid the complicated configuration process of the server address in the terminal and improve the service level for the users.

### Brief Description of the Drawings

Fig 1 is a flow chart of a method in accordance with the present invention;
Fig 2 is a structural diagram of a system in accordance with the present invention;
Fig 3 is a sketch map of an embodiment in accordance with the present invention.

### Detailed Description of the Preferred Embodiments

The technical solution of the present invention will be more fully described by the following detailed description of preferred embodiments of the invention which is to be considered together with the accompanying drawings.

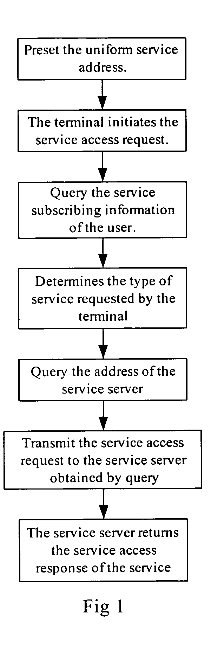

As shown in FIG.1, according to the method of the present invention, firstly a uniform service address is preset for each service in the terminal respectively. The terminal initiates a service access request, and the service access request includes the uniform service address of some service, the user number of the terminal (e.g. MSISDN number), and the current access address of the terminal (e.g. current IP address). Then the service subscribing information of the user is queried, i.e., determining whether the user subscribed the service he requested to access. If the user subscribed the service, the type of the service is determined according to the service address included in the service access request, and then the address of the corresponding Service Server of the service is queried. After obtaining the address of the corresponding Service Server, the service access request is transmitted to the Service Server and the Service Server returns the service access response to the terminal.

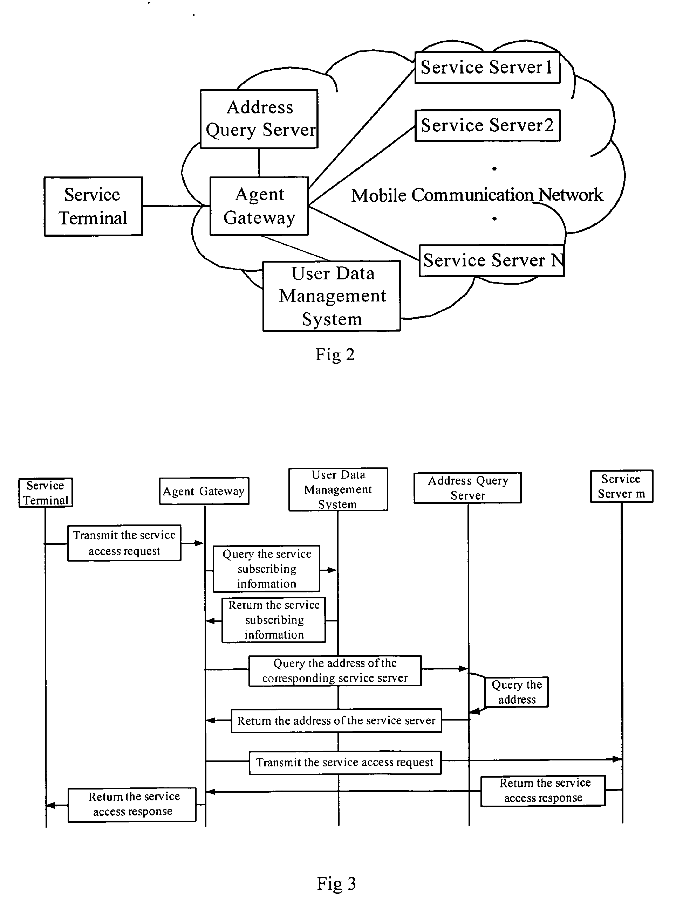

Figure 2 is a structural diagram of a system for redirecting the terminal request which comprises N Service Servers, a User Data Management System, an Agent Gateway, and an Address Query Server located in the mobile communication network, wherein the Service Servers are primarily applied to providing specific service; the User Data Management System is applied to storing user numbers and the related service subscribing information thereof, and returning the service subscribing information corresponding to the user number after receiving the query request from the Agent Gateway; the Agent Gateway is connected with the Service Servers, the User Data Management System, the Address Query Server and the terminal respectively, and is applied to querying the User Data Management System about the user's service subscribing information, transmitting a request for querying the Address Query Server about the address of the Service Server, and buffering the address query result of the Service Server, at the same time receiving and transmitting the service access request from the terminal and the service access response returned by the Service Server; the Address Query Server is primarily applied to querying the address of the Service Server corresponding to the current service request of the terminal according to the request of the Agent Gateway. Besides, a uniform service address is preset respectively for each service in the terminal.

As shown in FIG.3, a specific embodiment is provided as follow: A terminal in which a uniform service address is preset transmits a service access request to the Agent Gateway. The service access request includes the information of the uniform service address, the user number of the terminal (e.g. MSISDN number), the current access address(e.g. the current IP address of the terminal) and etc. The Agent Gateway transmits a request to the User Data Management System for querying the service subscribing information corresponding to the user number. The request includes the user number. The User Data Management System returns the service subscribing information corresponding to the user number to the Agent Gateway, according to which the Agent Gateway determines whether the terminal has already subscribed the service it requests to access.

After that, the Agent Gateway determines the type of the service requested by the terminal according to the uniform service address in the service access request, then queries the address of the corresponding Service Server locally according to the user number and the type of the service. If failed to obtain the address of the corresponding Service Server locally, the Agent Gateway transmits a request to the Address Query Server to query the address of the corresponding Service Server. The request includes the information of the type of the service, the uniform service address, the user number and the current access address. The Address Query Server chooses the principle of address query according to the type of the service. Two query principles are provided in the present invention: the principle of accessing the nearest Service Server and the principle of accessing the Home Service Server. The Address Query Server then queries the address of the Service Server according to the principle of address query. If the principle of address query is the principle of accessing the nearest Service Server, the Address Query Server queries and obtains the address of the nearest Service Server according to the information of the user's current access address. If the principle of address query is the principle of accessing the Home Service Server, the Address Query Server queries the address of the Service Server which the user belongs to according to the user number and the type of the service. The Address Query Server returns the obtained address of the Service Server to the Agent Gateway. The Agent Gateway buffers the query result. The Agent Gateway transmits the service access request to the corresponding Service Server, then the Service Server returns the service access response to the Agent Gateway, and then the Agent Gateway returns the service access response to the terminal.

If the Agent Gateway obtains the address of the corresponding Service Server based on the local query, the Agent Gateway directly transmits the service access request to the corresponding Service Server, then the Service Server returns the service access response to the Agent Gateway, and then the Agent Gateway returns the service access response to the terminal.

Finally, it should be understood that the above embodiments are only used to explain, but not to limit the technical solution of the present invention. In despite of describing the present invention detailedly with reference to the preferred embodiments, it should be understood that various modifications, changes or equivalent replacements could be made by an ordinary person skilled in the relevant field without departing from the spirit and scope of the technical solution of the present invention, which should be covered in the extent of the claims of the present invention.

## Claims

1. A method for agent redirecting the terminal request, **characterized in that** said method comprises:
presetting a uniform service address for each service in the terminal;
the terminal initiating a service access request;
the Agent Gateway querying the service subscribing information of the user;
the Agent Gateway determining the type of the service requested by the terminal according to the uniform service address and querying the address of the corresponding Service Server;
the Agent Gateway transmitting the service access request to the Service Server obtained by query; and
the Service Server returning a service access response to the terminal via the Agent Gateway.

2. A method for agent redirecting the terminal request as claimed in claim 1, **characterized in that** said service access request initiated by the terminal includes the uniform service address of a service, the user number, and the current access address of the terminal.

3. A method for agent redirecting the terminal request as claimed in claim 1, **characterized in that** said querying the address of the Service Server comprises:
choosing the principle of address query according to the type of the service; and
querying the address of the Service Server according to said principle.

4. A method for agent redirecting the terminal request as claimed in claim 2, **characterized in that** said principle of address query includes the principle of accessing the nearest Service Server and the principle of accessing the Home Service Server.

5. A method for agent redirecting the terminal request as claimed in claim 3, **characterized by** querying and obtaining the address of the nearest Service Server according to the information of the user's current access address if the principle of address query is the principle of accessing the nearest Service Server.

6. A method for agent redirecting the terminal request as claimed in claim 3, **characterized by** querying the address of the Service Server which the user belongs to according to the user number and the type of the service if the principle of address query is the principle of accessing the Home Service Server.

7. A system for agent redirecting the terminal request comprising N Service Servers and a User Data Management System located in the mobile communication network, wherein said Service Servers are applied to providing specific service and said User Data Management System is applied to storing user numbers and the corresponding service subscribing information thereof, **characterized in that**,
said system also comprises an Agent Gateway and an Address Query Server;
said Agent Gateway is connected with the terminal, said Service Servers, said User Data Management System, and said Address Query Server respectively, and is applied to transmitting requests for querying the service subscribing information of the user and the address of the Service Server, and applied to transmitting the service access request and response;
said Address Query Server is applied to querying the address of the Service Server corresponding to the current service request of the terminal.

8. A system for agent redirecting the terminal request as claimed in claim 7 **characterized in that**,
said Address Query Server determines the type of the service requested by the terminal according to the uniform service address included in the address query request transmitted by said Agent Gateway, then chooses the principle of address query according to the type of the service, and finally queries the address of the corresponding Service Server according to the principle of address query.

9. A system for agent redirecting the terminal request as claimed in claim 8 **characterized in that**, if the principle of address query is the principle of accessing the nearest Service Server, the Address Query Server queries and obtains the address of the nearest Service Server according to the information of the user's current access address.

10. A system for agent redirecting the terminal request as claimed in claim 8 **characterized in that**, if the principle of address query is the principle of accessing the Home Service Server, the Address Query Server queries the address of the Service Server which the user belongs to according to the user number and the type of the service.
